# FASCICULE DE BREVET EUROPEEN

(11) **EP 4 308 252 B1**
(45) Date de publication et mention de la délivrance du brevet: **16.04.2025**
(21) Numéro de dépôt: 22714155.3
(22) Date de dépôt: 11.03.2022
(51) Int. Cl.: A62B 18/02, A62B 18/04, A62C 99/00, G02B 27/01, G06F 3/01, G09B 5/06, G09B 19/00

(54) **SYSTEME D'ENTRAINEMENT AUX RISQUES ET MENACES NRBC**
SYSTEM ZUM TRAINING IN CBRN-RISIKEN UND BEDROHUNGEN
SYSTEM FOR TRAINING IN CBRN RISKS AND THREATS

(30) Priorité: 14.03.2021 FR 2102511
(43) Date de publication de la demande: 24.01.2024
(73) Titulaire: ERTC Technologies, 68360 Soultz-Haut-Rhin (FR)
(72) Inventeur: MAEDER, Olivier, 68500 Issenheim (FR)
(74) Mandataire: Gabriel, Franck
(86) Numéro de dépôt international: PCT/EP2022/056313
(87) Numéro de publication internationale: WO 2022/194696

(56) Documents cités:
- EP-A1- 3 100 768
- WO-A1-03/015057
- WO-A1-2019/164737
- US-A1- 2002 039 085
- US-A1- 2003 062 046
- US-A1- 2004 130 504
- US-A1- 2005 168 403
- JONES DAVID ET AL: "Measuring Stress in an Augmented Training Environment: Approaches and Applications", 21 June 2016, INTELLIGENT ROBOTICS AND APPLICATIONS; [LECTURE NOTES IN COMPUTER SCIENCE; LECT.NOTES COMPUTER], SPRINGER INTERNATIONAL PUBLISHING, CHAM, PAGE(S) 23 - 33, ISBN: 978-3-030-89846-5, ISSN: 0302-9743, XP047556036

## Description

### Domaine technique

L'invention concerne un système d'entrainement aux risques et menaces NRBC (Nucléaires, Radiologiques, Biologiques, Chimiques) réalisé sous la forme d'un masque NRBC utilisant la réalité virtuelle augmentée (i.e. aussi connu sous l'acronyme anglais AR pour « Augmented Reality ») en combinaison avec un scénario de réalité virtuelle. Un risque ou une menace NRBC est un risque ou une menace soit nucléaire, soit radiologique, soit biologique, et/ou soit chimique correspondant à un niveau de danger élevé pour la vie humaine, en affectant potentiellement la vie des populations civiles ou des acteurs de sécurité et de défense comme la sécurité civile, les pompiers, les gendarmes, les policiers ou les militaires. La formation ou l'entrainement permettent aux acteurs de sécurité et de défense d'appréhender les risques et menaces NRBC dans le cadre d'un entraînement avant d'y être confrontés en condition réelle. L'invention vise à fournir un système d'entrainement à réalité virtuelle augmentée s'appliquant notamment à la formation professionnelle et l'entrainement desdits acteurs de sécurité et de défense.

### Technique antérieure

A titre d'exemple pour l'entrainement des pompiers, les outils pédagogiques de formation et d'entrainement existants consistent soit en un caisson-feu, une maison à feu ou une tour de manœuvre ou des bâtiments désaffectés dans lesquels sont reproduits l'ensemble des phénomènes auxquels peuvent être confrontés les pompiers lors d'un incendie. Ainsi, les pompiers peuvent répéter des gestes techniques afin de s'entraîner et d'améliorer leur efficacité opérationnelle dans des conditions proches de la réalité. Divers inconvénients résultent d'une telle approche de la formation et de l'entrainement, notamment : difficultés à trouver des bâtiments désaffectés, plateforme couteuse, impact environnemental (i.e. par la génération d'effluents solides, liquides, gazeux et de déchets), mise en œuvre technique complexe, sécurité des intervenants. Des problématiques similaires existent pour la formation et l'entrainement pour les autres acteurs de sécurité et de défense dans leurs contextes spécifiques. En conclusion, la formation actuelle est compliquée car dangereuse dans certains cas, les types d'interventions risquées ne pouvant pas être contrôlées donc moins pratiquées en entraînement et aussi coûteuse en matériels spécialement conçus pour les apprentissages.

Il existe donc un besoin d'offrir une technique de formation et d'entrainement plus facile à mettre en œuvre, par exemple en réduisant, voire en évitant les inconvénients précités.

Le document US 2005/168403 A1 décrit un système et un procédé de réalité augmentée sans fil, dans lequel l'utilisateur porte une partie ou la totalité de l'équipement nécessaire pour effectuer une simulation. Divers agencements sont présentés qui peuvent être sélectionnés en fonction des besoins du système, tels que le nombre d'utilisateurs et le type d'équipement de suivi. Le système et le procédé sont utilisés pour la formation des pompiers.

Le document XP 047556036 (David Jones et al., « Measuring Stress in an Augmented Training Environment: Approaches and Applications », 21/06/2016, INTELLIGENT ROBOTICS AND APPLICATIONS pages. 23-33, Springer International Publishing Switzerland 2016) décrit un système d'entrainement permettant d'adapter le niveau de stress pour optimiser l'entrainement en réalité virtuelle.

### Résumé de l'invention

C'est un objet de l'invention que de proposer un système d'entrainement aux risques et menaces NRBC qui surmonte un ou plusieurs des inconvénients ou limitations des techniques de formation et d'entrainement existantes.

Selon un aspect, il est proposé un système d'entrainement aux risques nucléaire, radiologique, biologique, chimique NRBC utilisant un scénario de réalité virtuelle, caractérisé en ce que le système comprend un masque à réalité virtuelle augmentée NRBC-AR comportant :
- un écran de réalité virtuelle ;
- au moins un module de traitement graphique comportant un microprocesseur graphique pour diffuser des images du scénario de réalité virtuelle sur l'écran de réalité virtuelle ;
- au moins un module de traitement principal comportant un microprocesseur principal ;
- une mémoire comportant le, au moins un, scénario de réalité virtuelle ;
- au moins un capteur biométrique mesurant un paramètre physiologique d'un utilisateur du masque NRBC-AR lors de l'exécution dudit scénario de réalité virtuelle ;
- au moins un actuateur de stress modifiant un paramètre environnemental intérieur du masque lors de l'exécution dudit scénario de réalité virtuelle, ledit actuateur de stress comportant une valve à ouverture contrôlée qui dirige de l'air vers l'intérieur du masque NRBC-AR de manière à réguler un flux d'air entrant ; et
le microprocesseur principal du module de traitement principal est agencé pour :
- contrôler le microprocesseur graphique du module de traitement graphique pour diffuser ledit scénario de réalité virtuelle sur l'écran de réalité virtuelle ;
- comparer le paramètre physiologique de l'utilisateur à une valeur physiologique de référence ; et
- adapter en temps réel ledit scénario de réalité virtuelle en contrôlant en temps réel l'actuateur de stress pour modifier au moins un paramètre environnemental intérieur du masque, ladite modification d'au moins un paramètre environnemental intérieur du masque consistant au moins à opérer la valve à ouverture contrôlée pour réguler le flux d'air entrant de façon à réduire l'arrivée de flux d'air pour augmenter un état de stress de l'utilisateur ou à augmenter l'arrivée de flux d'air pour réduire ledit état de stress de l'utilisateur.

Le capteur biométrique peut être choisi parmi un capteur de pouls, un capteur de température corporelle, un capteur de mesure de la saturation en oxygène du sang, des électrodes de mesure de l'activité électrique du cerveau, un capteur de mesure de la fréquence respiratoire, un capteur de mesure du diamètre de la pupille, et/ou un capteur de mesure de la conductance électrodermale.

L'actuateur de stress comporte en outre une résistance chauffante et/ou une électrode générant une décharge électrique.

Le masque à réalité virtuelle augmentée NRBC-AR comporte en outre une cartouche filtrante, ladite cartouche filtrante étant équipée de la valve à ouverture contrôlée.

Le masque à réalité virtuelle augmentée NRBC-AR peut être couplé à un respirateur externe par l'intermédiaire de la valve à ouverture contrôlée.

La cartouche filtrante ou le respirateur externe peut être équipée d'un générateur d'odeur, par exemple une ou plusieurs capsule ou pastille de gaz libérant une odeur spécifique.

La cartouche filtrante peut comporter une batterie.

Le masque à réalité virtuelle augmentée NRBC-AR peut comporter une carte électronique intégrant le module de traitement graphique, le module de traitement principal et la mémoire, ladite carte étant connectée à au moins une caméra de réalité virtuelle, au moins un module audio, et/ou au moins une connectique filaire ou sans fil intégrés audit masque.

Le système peut en outre comporter un module de contrôle interconnecté avec le masque NRBC-AR, le module de contrôle comportant une bibliothèque comprenant des scénarii de réalité virtuelle, au moins un scénario de réalité virtuelle étant téléchargé vers la mémoire du masque à réalité virtuelle augmentée NRBC-AR avant l'exécution dudit scénario de réalité virtuelle.

Le système peut en outre comporter au moins un objet de type contenant et au moins un objet de type détecteur interconnectés ensemble ainsi qu'avec le module de contrôle et le masque NRBC-AR.

Chacun des objets de type contenant et détecteur peut comporter un microprocesseur secondaire connecté à une pluralité de capteurs et d'actionneurs, le microprocesseur secondaire étant agencé pour activer une ou plusieurs fonctions desdits capteurs et d'actionneurs lors de l'exécution dudit scénario de réalité virtuelle.

Selon un autre aspect, il est proposé un programme d'ordinateur d'entrainement aux risques nucléaire, radiologique, biologique, chimique NRBC utilisant un scénario de réalité virtuelle, le programme d'ordinateur comprenant des instructions de code de programme pour l'exécution des étapes suivantes lorsque le programme est exécuté par un microprocesseur d'un système comprenant un masque à réalité virtuelle augmentée NRBC-AR :
- exécuter un scénario de réalité virtuelle en diffusant des images à un utilisateur portant le masque à réalité virtuelle augmentée NRBC-AR ;
- mesurer en temps réel au moins un paramètre physiologique de l'utilisateur lors de l'exécution dudit scénario de réalité virtuelle ;
- comparer le, au moins un, paramètre physiologique de l'utilisateur à au moins une valeur physiologique de référence ;
- adapter en temps réel ledit scénario de réalité virtuelle en contrôlant en temps réel l'état de stress de l'utilisateur en modifiant au moins un paramètre environnemental intérieur du masque à réalité virtuelle augmentée NRBC-AR lors de l'exécution dudit scénario de réalité virtuelle, ladite modification d'au moins un paramètre environnemental intérieur du masque consistant au moins à réguler le flux d'air entrant vers l'intérieur du masque NRBC-AR de façon à réduire l'arrivée de flux d'air pour augmenter un état de stress de l'utilisateur ou à augmenter l'arrivée de flux d'air pour réduire ledit état de stress de l'utilisateur.

Ladite modification d'au moins un paramètre environnemental intérieur du masque peut en outre consister à chauffer l'air intérieur du masque et/ou à générer une décharge électrique à l'intérieur du masque.

L'invention est particulièrement applicable pour reproduire ou simuler un environnement présentant un risque ou une menace NRBC afin d'améliorer les aptitudes desdits acteurs de sécurité et de défense sans qu'ils ne subissent les conséquences de leurs échecs. Le système d'entrainement selon l'invention possède en outre les avantages suivants :
- Les scénarios correspondent à des exercices normalisés, permettant de qualifier/certifier les acteurs selon les normes NRBC en vigueur ;
- Le système permet de mieux préparer les acteurs de sécurité et de défense pour affronter la réalité du ou des risques et menaces auxquels ils seront confrontés ;
- Le système ne nécessite pas de mettre en place des infrastructures d'entrainement complexes ;
- Le système peut être utilisé pour former et entraîner un acteur de sécurité et de défense ou un groupe d'acteurs de sécurité et de défense ; et
- Le système est structurellement léger, compact et simple d'installation, il est donc particulièrement adapté à des formations itinérantes/mobiles.

D'autres avantages ressortiront de la description ci-après de l'invention.

### Brève description des dessins

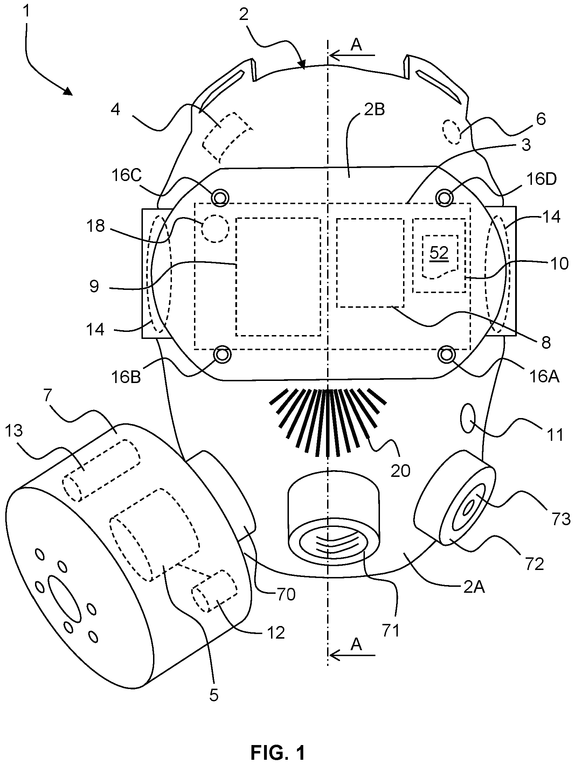

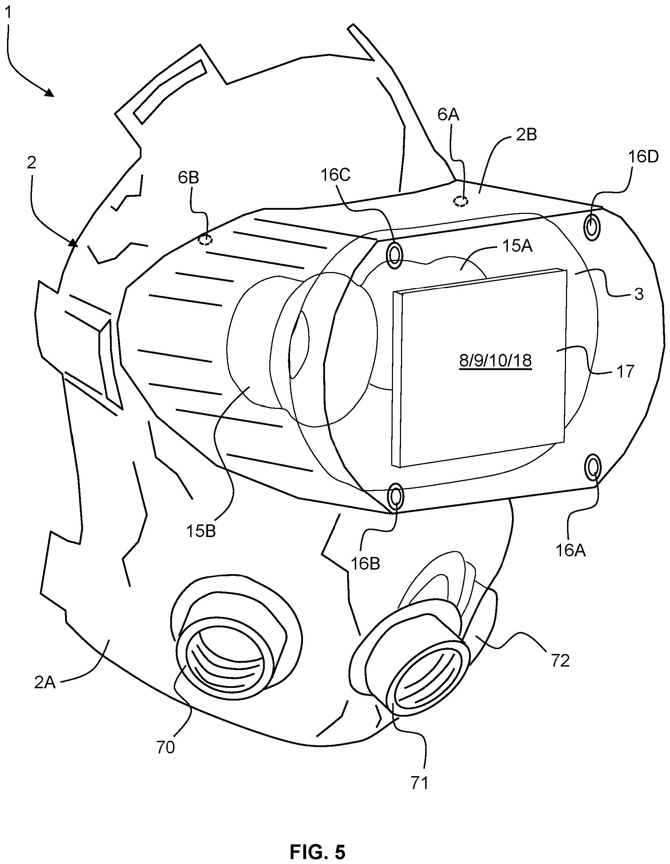

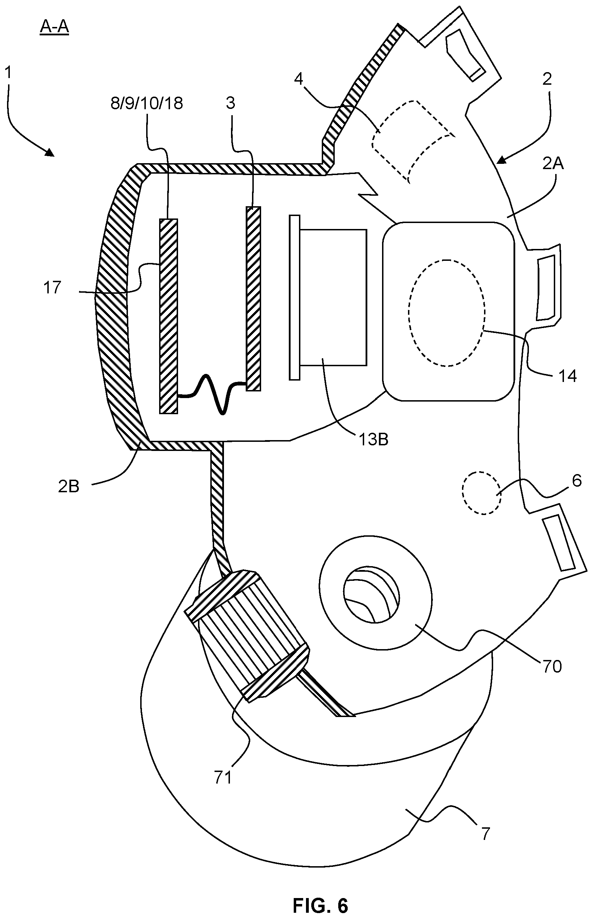

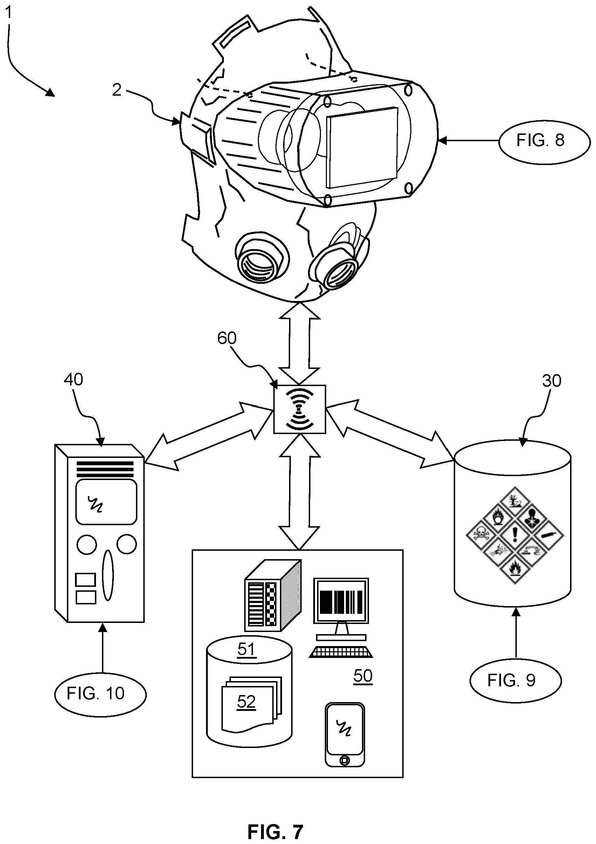

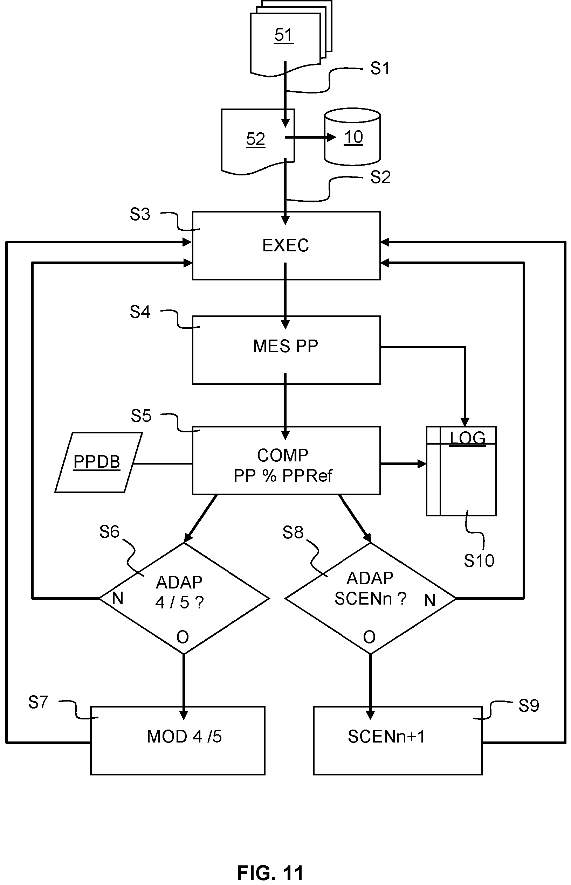

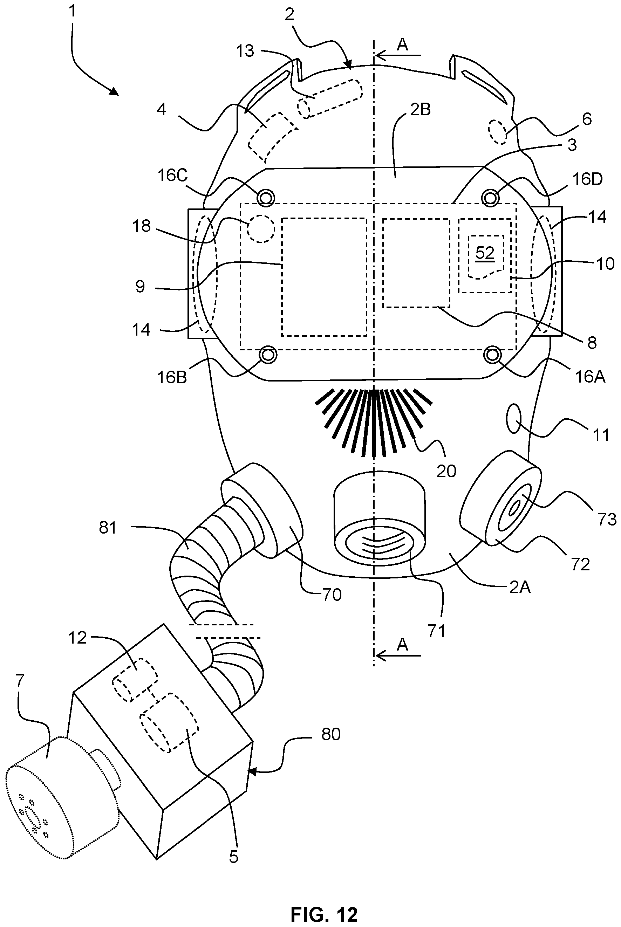

La présente invention est illustrée par des exemples et non limitée aux dessins annexés, dans lesquels des références similaires indiquent des éléments similaires :
- Les Figures FIG. 1, FIG. 2, FIG. 3 et FIG. 4 sont des vues schématiques, respectivement de face, de dessous, en perspective de côté et de côté illustrant un masque NRBC-AR avec une cartouche filtrante selon l'invention ;
- La Figure FIG. 5 est une vue schématique en perspective de côté et semi-transparente illustrant un masque NRBC-AR sans cartouche filtrante selon l'invention ;
- La Figure FIG. 6 est une vue en coupe selon A-A de la FIG. 1 illustrant un masque NRBC-AR avec une cartouche filtrante selon l'invention ;
- Les Figures FIG. 7, FIG. 8, FIG. 9 et FIG. 10 sont des vues schématiques du système d'entrainement aux risques NRBC-AR selon l'invention, illustrant respectivement le système complet selon un mode de réalisation particulier, des synoptiques des éléments constitutifs et des fonctions respectivement du masque NRBC-AR, d'un objet de type contenant et d'un objet de type détecteur ;
- La Figure FIG. 11 illustre schématiquement un procédé d'entrainement utilisant le système d'entrainement aux risques NRBC selon l'invention ; et
- La Figure FIG. 12 est une vue schématique en perspective de face illustrant un masque NRBC-AR selon un autre mode de réalisation de l'invention avec un respirateur externe.

### Description détaillée

L'invention sera comprise à partir de la description suivante, dans laquelle il est fait référence aux dessins annexés.

Le système d'entrainement 1 aux risques et menaces NRBC selon l'invention comporte un masque 2 utilisant la réalité virtuelle augmentée NRBC-AR. La réalité virtuelle augmentée (autrement appelée multimédia immersif ou réalité simulée par ordinateur) est une technologie informatique qui reproduit un environnement, réel ou imaginaire, et simule la présence et l'environnement physique d'un utilisateur pour permettre une interaction de la personne, ici l'acteur de sécurité et de défense lors d'une session de formation ou d'entrainement. La réalité virtuelle crée artificiellement une expérience sensorielle, qui peut inclure la vue, le toucher, l'ouïe, l'odorat et la perception de la chaleur. La finalité de la réalité virtuelle est de permettre à une personne (ou à plusieurs) une activité sensori-motrice et cognitive dans un monde artificiel, créé numériquement, qui peut être « imaginaire, symbolique ou une simulation de certains aspects du monde réel » pour procurer une immersion.

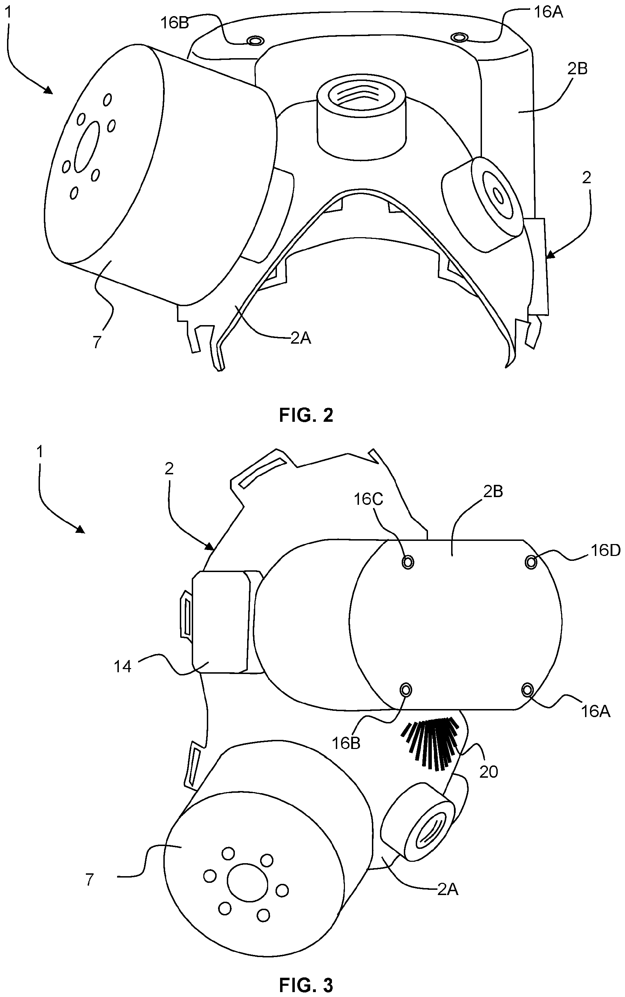

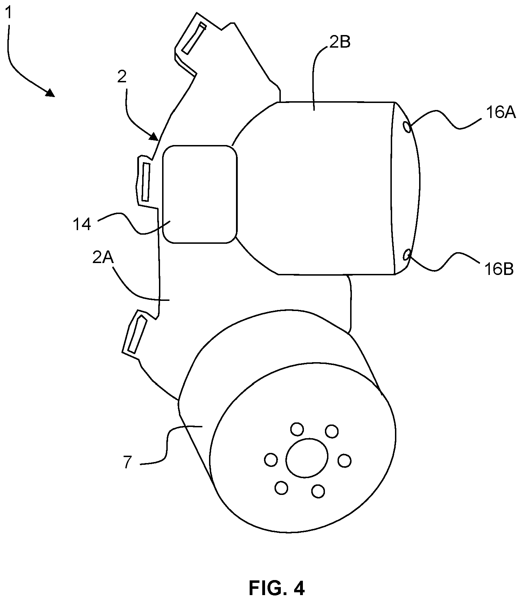

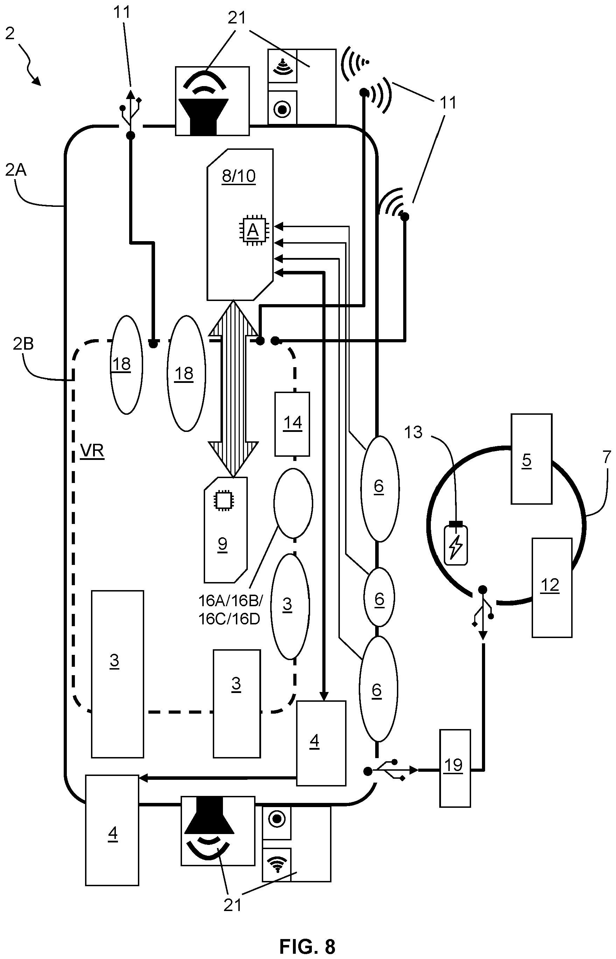

La Figure FIG. 1 est une vue schématique de face du masque NRBC-AR 2 avec une cartouche filtrante selon l'invention. La Figure FIG. 2 est une vue schématique de dessous du masque 2. La Figure FIG. 3 est une vue schématique en perspective de côté du masque 2. La Figure FIG. 4 est une vue schématique de côté du masque 2. La FIG. 5 est une vue schématique en perspective de côté et semi-transparente du masque 2 sans cartouche filtrante. La FIG. 6 est une vue en coupe selon AA de la FIG. 1 du masque 2 avec une cartouche filtrante. La Figure FIG. 8 illustre par une représentation synoptique les éléments constitutifs et les fonctions du masque NRBC-AR 2.

Le masque utilisant la réalité virtuelle augmentée NRBC-AR 2 utilisé pour l'entrainement reproduit les caractéristiques réelles d'un masque NRBC à savoir une protection du visage et des voies respiratoires de l'utilisateur qui le porte, un confort sur la durée, et une ergonomie optimale. Le masque NRBC-AR 2 comporte un écran de réalité virtuelle 3, au moins un module de traitement graphique 9 comportant un microprocesseur graphique, au moins un module de traitement principal 8 comportant un microprocesseur principal, une mémoire 10 comportant une bibliothèque comprenant le, au moins un, scénario de réalité virtuelle, au moins une caméra de réalité virtuelle 16A, 16B, 16C et 16D, au moins un capteur biométrique 6, au moins un actuateur de stress 4, au moins un module audio 14, et au moins une connectique filaire ou sans fil 11. Selon l'exemple de réalisation des Figures FIG. 1 à FIG. 6, le masque NRBC-AR 2 peut comporter au moins une cartouche filtrante 7. Le masque NRBC-AR 2 comporte une première partie 2A formant le masque NRBC avec des fonctions additionnelles qui vont être décrites ci-dessous, et une seconde partie 2B formant un casque de réalité virtuelle VR.

Généralement, la première partie 2A est constituée d'un mélange de chloro-butyle et silicone, permettant au masque d'être souple, confortable au port sur la durée et facilement ajustable sur un grand nombre de morphologie de visage des utilisateurs. Ce mélange reproduit les caractéristiques de protection et d'étanchéité usuelles. Alternativement, la première partie 2A peut être constituée d'une coque rigide pour intégrer tous les éléments du masque NRBC-AR 2 et d'une interface visage/masque NRBC-AR 2 en chloro-butyle et silicone. Le masque est équipé d'une évacuation d'air et d'une pastille phonique 20 en face avant, éventuellement aussi en position haute du masque. Cette évacuation d'air et pastille phonique 20 permettent un flux d'air vers l'extérieur pour réduire l'accumulation de chaleur humide et éviter la buée sur l'écran de réalité virtuelle 3, et aussi transmettre la voix de l'utilisateur vers l'extérieur.

Les figures représentent la première et la second partie 2A et 2B comme étant formées ensemble de manière intégrale pour constituer un ensemble complet.

Alternativement, la première et la seconde partie 2A et 2B peuvent être distinctes afin que le casque de réalité virtuelle VR soit amovible du masque NRBC proprement dit. Dans ce cas, afin de préserver une étanchéité totale, de permettre une obturation de la lumière extérieure et de réaliser une sensation de confinement du visage sous le masque, un soufflet en chloro-butyle et silicone est positionné entre le masque NRBC et le casque de réalité virtuelle VR. Ce soufflet permet également d'offrir un réglage en profondeur qui confère une certaine mobilité du casque de réalité virtuelle VR par rapport au masque NRBC tout en étant solidaire l'un de l'autre.

Le masque comporte un ou plusieurs capteurs biométriques 6. Le capteur biométrique 6 mesure un paramètre physiologique de l'utilisateur du masque NRBC-AR lors de l'exécution dudit scénario de réalité virtuelle. Le capteur biométrique 6 peut être un capteur de pouls (mesure de la fréquence cardiaque), et/ou un capteur de température corporelle, et/ou un capteur de mesure de la saturation en oxygène du sang, et/ou des électrodes de mesure de l'activité électrique du cerveau (électroencéphalographie EEG), et/ou un capteur de mesure de la fréquence respiratoire, et/ou un pupillomètre (mesure du diamètre de la pupille), et/ou un capteur de mesure de la conductance électrodermale de l'utilisateur portant le masque. Le ou les capteurs biométriques 6 peuvent être intégrés sur la partie frontale du masque ou être positionnés sur la partie temporale gauche et droite. Le ou les capteurs biométriques 6 sont connectés au microprocesseur du module de traitement principal 8 et transmettent des données vitales correspondantes à des paramètres physiologiques de l'utilisateur porteur du masque. Ces paramètres physiologiques renseignent sur l'état de stress ou les difficultés respiratoires de l'utilisateur lors de l'exécution du scénario de réalité virtuelle. Un réseau filaire de connexion des capteurs (non montré pour des raisons de clarté des dessins) peut passer dans la doublure intérieure du masque jusqu'à la carte électronique 17.

De préférence, l'actuateur de stress 4 est réalisé au moyen de la valve à ouverture contrôlée 5 qui dirige l'air extérieur vers l'intérieur du masque de manière à réguler le flux d'air entrant. La valve à ouverture contrôlée 5 peut être positionnée dans la cartouche filtrante 7 ou au niveau d'un respirateur externe 80 pour des raisons d'encombrement, mais aussi directement intégrée dans le masque. La valve à ouverture contrôlée 5 permet une gestion du flux d'air entrant. Dans un mode de fonctionnement, la valve à ouverture contrôlée 5 peut être opérée de manière à réduire considérablement l'arrivée de flux d'air, ceci pour simuler des conditions particulières d'entrainement (i.e. manque d'air respirable) et occasionner un stress à l'utilisateur. A contrario, la valve à ouverture contrôlée 5 peut être opérée de manière à augmenter l'arrivée de flux d'air pour diminuer le stress de l'utilisateur. La valve à ouverture contrôlée 5 permet aussi de simuler plus fidèlement la réalité d'un exercice. Par exemple, la pénétration dans une zone enfumée causant une réduction de l'air respirable peut être simulée par une perte de charge résultant de la réduction de l'arrivée du flux d'air, puis la sortie de ladite zone pour entrer dans une zone libre de fumée peut être simulée par une augmentation de l'arrivée du flux d'air. Ainsi, la valve à ouverture contrôlée 5 permet de moduler le stress de l'utilisateur pour reproduire ou simuler un environnement présentant un risque ou une menace NRBC dans le cadre de l'entrainement.

L'actuateur de stress 4 peut aussi être par exemple une résistance chauffante, par exemple une nappe chauffante destinée à faire ressentir une sensation de chaleur à l'utilisateur. A titre d'alternative, l'actuateur de stress 4 peut être par exemple une ou plusieurs électrodes destinées à faire ressentir une décharge électrique à l'utilisateur (on entend par décharge électrique, une décharge d'intensité faible propre à créer un picotement). Une combinaison de plusieurs types d'actuateur de stress est possible. Bien que l'actuateur de stress 4 soit illustré comme positionné au niveau du masque en contact avec la partie supérieure du visage de l'utilisateur, celui-ci peut être positionné à un autre endroit approprié (par exemple au niveau des joues) ou à de multiples endroits du masque afin d'affecter différentes parties du visage de l'utilisateur. L'actuateur de stress 4 est commandé par le module de traitement principal 8 et connecté à la carte électronique 17. Alternativement, un ou plusieurs actuateurs de stress 4 peuvent être disposés sur le corps de l'utilisateur ou dans la tenue de l'utilisateur. La cartouche filtrante 7 peut être couplée à la première partie 2A par l'intermédiaire d'un connecteur de cartouche type trou taraudé/fileté droite 70, face 71 et gauche 72. Le positionnement d'une cartouche latérale au choix du côté droit ou gauche ou de deux cartouches latérales permet à l'utilisateur de baisser la tête aisément, ce qui améliore l'aisance de l'utilisateur selon le scénario d'entrainement proposé. Une cartouche peut aussi être positionnée en face avant. La cartouche filtrante 7 peut être équipée de la valve à ouverture contrôlée 5 qui dirige l'air extérieur vers le visage. De manière optionnelle, la cartouche filtrante 7 peut être équipé d'un générateur d'odeur 12, par exemple une ou plusieurs capsule ou pastille de gaz libérant une odeur spécifique, par exemple via la valve à ouverture contrôlée 5 dans le flux d'air entrant.

Avantageusement, la cartouche filtrante 7 peut comporter une batterie 13. Les capacités des batteries disponibles sur le marché offrent une autonomie limitée pour le fonctionnement de l'ensemble du masque NRBC-AR 2. La cartouche filtrante 7 étant amovible, il est possible de remplacer la cartouche filtrante 7 en cours ou entre des séquences pédagogiques par une autre cartouche filtrante. Avantageusement, la batterie 13 peut être rechargeable. Alternativement, le masque NRBC-AR 2 peut être connecté à des batteries externes transportables par ceinture ou bandoulière, soit à l'intérieur d'un sac. Avantageusement, ces ensembles de batteries (par cartouches ou externes) peuvent alimenter un masque NRBC-AR 2 avec la possibilité d'ajuster et d'adapter le nombre de batteries en fonction de la durée souhaitée pour couvrir la totalité de la durée d'une session de formation et d'entrainement. La cartouche filtrante 7 peut être connectée à la carte électronique 17 par une interface cartouche 19 comme une liaison filaire, par exemple USB (de l'anglais Universal Serial Bus) de type C (i.e. norme USB-C).

Les connecteurs droit 70, face 71 et gauche 72 non utilisés sont généralement munis d'un bouchon obturateur ou d'un clapet d'évacuation d'air 73.

Les connecteurs droit 70, face 71 et gauche 72 peuvent également être utilisé pour coupler un appareil de type appareil respiratoire isolant ARI (non illustré).

La Figure FIG. 12 est une vue schématique en perspective de face illustrant un masque NRBC-AR 2 selon un autre exemple de réalisation de l'invention dans lequel le masque est couplé à un respirateur externe 80 par l'intermédiaire d'un tuyau souple 81 et de la valve à ouverture contrôlée 5. Cet exemple de réalisation diffère de l'exemple de réalisation des Figures FIG. 1 à FIG. 6 en ce que la valve à ouverture contrôlée 5 est déportée dans le respirateur externe 80. Selon l'exemple présenté, le respirateur externe 80 peut être muni de la cartouche filtrante 7 (en pointillé) et du générateur d'odeur 12. Dans l'exemple, la batterie 13 est positionnée dans une zone définie de la première partie 2A. Selon un autre exemple non présenté, le respirateur externe 80 peut être du type appareil respiratoire isolé ARI sans cartouche filtrante, puisque l'air provient alors d'une bouteille.

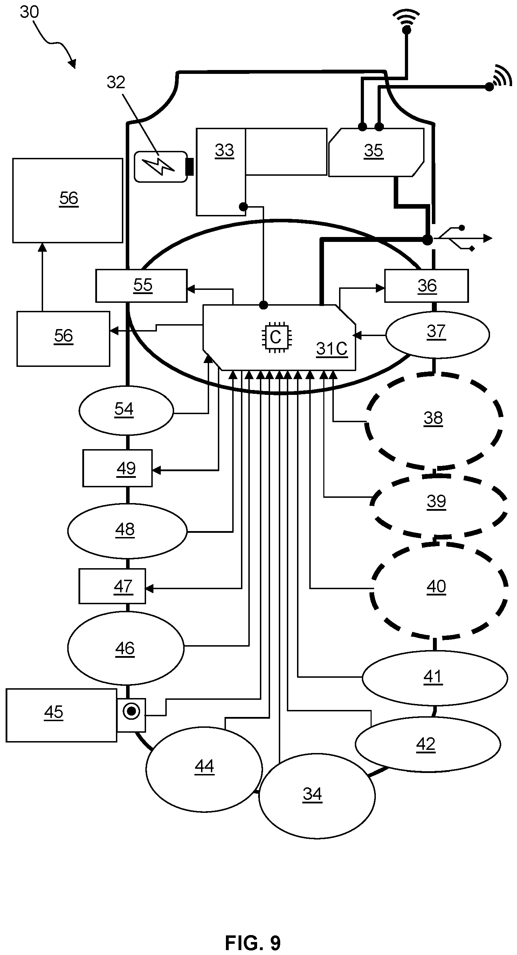

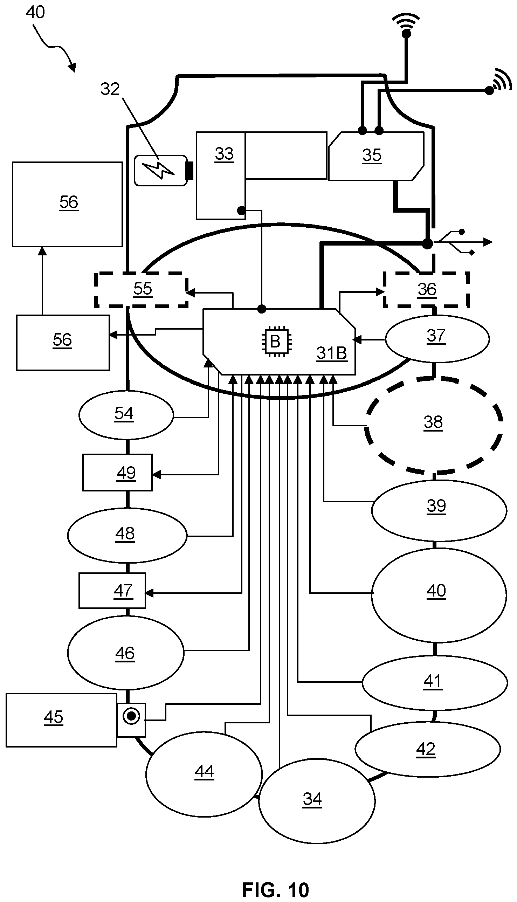

Le casque de réalité virtuelle VR de la seconde partie 2B comporte un écran de réalité virtuelle 3 de type panoramique présentant un champ de vision important. Il comporte en outre une optique binoculaire comportant des lentilles 15A, 15B permettant une correction optique pour éliminer tout risque de vision déformée. Il comporte le module de traitement graphique 9 comportant le microprocesseur graphique. Des capteurs de position 18 sont intégrés au casque de réalité virtuelle VR de la seconde partie 2B ou dans la première partie du 2A, tel que gyroscope, magnétomètre et accéléromètre pour détecter les mouvements et gestes de l'utilisateur. Ils sont avantageusement intégrés à la carte électronique 17 (voir FIG. 6). Ces mouvements et gestes sont appliqués sur les images recalculées en temps réel par le microprocesseur graphique en fonction des informations transmises par les capteurs de position pour se calquer sur les mouvements et gestes de l'utilisateur. Il comporte enfin au moins une caméra de réalité virtuelle VR, avantageusement quatre caméras 16A, 16B, 16C et 16D connectées au microprocesseur graphique pour intégrer les interactions avec les objets du type contenant 30 (voir FIG.7 et FIG. 9) ou détecteur 40 (voir FIG.7 et FIG. 10) et les appliquer sur les images recalculées en temps réel. Le casque de réalité virtuelle VR comporte aussi un module audio 14, par exemple au moins un écouteur, de préférence un de chaque côté du visage sensiblement à hauteur des oreilles de l'utilisateur.

La seconde partie 2B peut être réalisée dans le même matériau que la première partie 2A. Alternativement, elle peut comporter un surmoulage extérieur en matériaux flexible et peut supporter des entraînements contraignants, par exemple des chocs sans affecter le fonctionnement des éléments constitutifs du casque.

Avantageusement, le masque intègre sensiblement au niveau de la seconde partie 2B la carte électronique 17. La carte électronique 17 comporte le module de traitement graphique 9, le module de traitement principal 8 et la mémoire 10. Le module de traitement graphique 9 comporte le microprocesseur graphique dédié à l'écran de réalité virtuelle 3, et est connecté au module audio 14 et aux caméras de réalité virtuelle 16A, 16B, 16C et 16D. Le module de traitement principal 8 comporte le microprocesseur principal dédié au système d'exploitation, au contrôle de l'exécution du scénario de formation et d'entrainement, à la réception des mesures du ou des capteurs biométriques 6, au contrôle du ou des actuateurs de stress 4, au contrôle de la cartouche (valve 5 et générateur d'odeur 12) et à la gestion de la connectique vers l'extérieur 11. La mémoire 10 est connecté au module de traitement principal 8 et contient au moins le scénario de réalité virtuelle 52 chargé pour la session de formation et d'entrainement courante. Dans un mode de réalisation particulier, si la mémoire est suffisamment importante, la mémoire peut comporter une bibliothèque comprenant plusieurs scénarii de réalité virtuelle.

La connectique vers l'extérieur 11 peut être de type filaire ou sans fil, par exemple USB, mini-USB, câblage Ethernet normalisé (e.g. RJ45), Wi-Fi (de l'anglais Wireless Fidelity), Bluetooth (nom déposé), etc...

Le masque NRBC-AR 2 peut comporter un dispositif d'hydratation permettant à l'utilisateur de s'hydrater tout au long d'un exercice d'entrainement (non montré sur les figures). Le masque NRBC-AR 2 peut être équipé d'autres accessoires (non illustrés) permettant de s'adapter aux conditions opérationnelles de la formation et de l'entrainement, tels que harnais, amplificateur de voix et micro, dispositif de vision sous masque, dispositif de communication pour les exercices multi-participants, une interface avec des équipements de protection individuels EPI, et une interface avec des moyens appropriés aux risques et menaces NRBC considérés dans le scénario d'entrainement (e.g. détecteur), etc...

La Figure FIG. 7 est une vue schématique globale d'un mode de réalisation du système d'entrainement 1 aux risques et menaces NRBC, illustrant le système complet avec ces éléments constitutifs et leurs fonctions, à savoir un masque NRBC-AR 2, un module de contrôle 50, un objet de type contenant 30, un objet de type détecteur 40 interconnectés par un routeur 60 sans fil (i.e. WiFi). La figure FIG. 8 illustre schématiquement les éléments constitutifs et des fonctions du masque NRBC-AR 2. La figure FIG. 9 illustre schématiquement les éléments constitutifs et fonctions d'un objet de type contenant 30. La figure FIG. 10 illustre schématiquement les éléments constitutifs et fonctions d'un objet de type détecteur 40.

Il faut noter que dans le système d'entrainement selon l'invention, l'exécution d'un scénario de réalité virtuelle ne fait pas forcément usage de tous les éléments, seul le masque NRBC-AR 2 est essentiel. Par exemple, dans un scénario d'entrainement à la reconnaissance dans un bâtiment en feu pour un utilisateur ayant la fonction de pompier, le masque NRBC-AR 2 simule la chaleur par l'activation de l'actuateur de stress 4 du type résistance chauffante, les émanations de gaz et de fumées par le floutage des images sur l'écran de réalité virtuelle 3 et la diminution de la saturation en oxygène en réduisant le flux d'air par l'intermédiaire de la valve à ouverture contrôlée 5.

Selon un mode de réalisation du système d'entrainement 1 aux risques et menaces NRBC, le masque NRBC-AR 2, l'objet de type contenant 30 et l'objet de type détecteur 40 sont interconnectés de manière filaire (e.g. câble USB) ou sans fil (e.g. routeur WiFi). Un utilisateur en formation ou en entrainement revêt le masque NRBC-AR 2. Un instructeur/formateur dispose d'un module de contrôle 50, par exemple une tablette numérique ou un ordinateur. Le module de contrôle 50 comporte une bibliothèque 51 comprenant au moins un scénario de réalité virtuelle 52. Le scénario ou les scénarii proposé(s) par l'instructeur/formateur en ambiance NRBC permet(tent) de recréer des évènements de nature nucléaire, radiologique, biologique, chimique et explosive. A titre d'exemple, pour la formation et l'entrainement des pompiers, les scénarii peuvent simuler des feux de cave, cuisine, chambre et cage d'escalier. L'exercice est dirigé et sous le contrôle d'un sapeur-pompier désigné comme l'instructeur/formateur. Dans le cadre de la formation ou l'entrainement, il peut être en liaison radio avec l'utilisateur, faire évoluer les différentes phases prévues par le scénario pédagogique ou laisser le scénario évoluer automatiquement, et intervenir à tout moment auprès de l'utilisateur pour recadrer l'exercice.

Il est entendu que l'utilisateur du masque NRBC-AR 2 peut également être muni d'une tenue NRBC complète (non montré sur les dessins) afin de simuler au mieux un contexte d'intervention aux risques et menaces NRBC. Une fois le casque positionné sur le visage de l'utilisateur et la tenue complète NRBC fermée, lors des séances de formation et d'entrainement, si une situation nécessite de stopper l'exercice, les caméras du casque de réalité virtuel, le module audio et les haut-parleurs peuvent permettre un échange visuel et auditif avec un instructeur/formateur sans avoir à procéder à un déshabillage complet de la tenue NRBC.

Les éléments constitutifs et les fonctions du masque NRBC-AR 2 illustré sur la figure FIG. 8 comportent le microprocesseur graphique dans une carte pilotage VR (module de traitement graphique 9) relié par un réseau filaire au microprocesseur principal (module de traitement principal 8). Le microprocesseur graphique dans la carte pilotage VR est connecté au gyroscope, à l'accéléromètre (capteurs de position 18), au module audio 14, aux caméras de réalité virtuelle 16, 16A, 16B, 16C et 16D. Il contrôle l'écran de réalité virtuelle 3, c'est-à-dire l'intensité lumineuse, l'équilibre (pour provoquer des perturbation visuelle) et un lecteur rétinien. Le microprocesseur principal 8 est connecté aux capteurs de saturation en oxygène, capteur de pouls et capteur de température (capteur biométrique 6), une unité de puissance connectée à une résistance chauffante (l'actuateur de stress 4), une interface de communication (connectique filaire ou sans fil 11, par exemple USB, Bluetooth, WiFi), à la cartouche filtrante 7 via une interface cartouche 19 et sa connectique appropriée (e.g. USB-C). Le masque NRBC-AR 2 peut également comporter des ensembles 21 haut-parleurs gauches et droites reliés respectivement à une prise jack gauche et droite.

L'objet de type contenant 30 est destiné à représenter tout objet et son contenu, par exemple un produit gazeux, liquide ou solide. L'objet de type détecteur 40 est destiné à représenter un équipement d'échantillonnage, un détecteur/analyseur de produit chimique/biologique ou de rayonnement.

Les éléments constitutifs et les fonctions de l'objet de type contenant 30 illustré sur la figure FIG. 9 ou de l'objet de type détecteur 40 illustré sur la figure FIG. 10 peuvent comporter un module de traitement principal comprenant un microprocesseur secondaire B pour le contenant 31C et un microprocesseur secondaire C pour le détecteur 31B, une batterie 32, un écran 33, un clavier 34, une interface de communication 35, un module audio 36, un microphone 37, un capteur de proximité 38, un gyroscope 39, un capteur de niveau 41, un capteur d'humidité 42, un accéléromètre 43, un capteur de poids 44, une entrée analogique 45, un capteur haptique 46, une diode électroluminescente 47 (e.g. LED IR), un capteur de température 48, un laser 49, une caméra 54, un vibreur 55 et une unité de puissance connectée à une résistance chauffante, moteur ou autre consommateur de courant 56.

Qu'il s'agisse de l'objet de type contenant 30 ou de l'objet de type détecteur 40, ils sont dotés de la même structure électronique pour représenter une sorte d'objet universel à qui une fonction spécifique lui sera attribuée selon le scénario de formation et d'entrainement envisagé.

Selon un exemple de réalisation particulier dans lequel l'objet de type contenant 30 illustré sur la figure FIG. 9 représente un bac rempli de produit chimique dans le scénario, seuls les capteurs de proximité 38, gyroscope 39 et capteur de niveau 41 sont activées (les éléments constitutifs ou les fonctions activées sont entourés d'un trait discontinu). Le capteur de proximité 38 permet de détecter l'approche de l'utilisateur (ou d'un objet tenu par l'utilisateur ou la main de l'utilisateur). Le gyroscope 39 permet de détecter si le contenant a été renversé. Le capteur de niveau 41 permet de simuler le niveau de liquide au cours d'une manipulation.

Selon un autre exemple de réalisation particulier dans lequel l'objet de type détecteur 40 illustré sur la figure FIG. 10 représente un détecteur de radiations (i.e. compteur Geiger) dans le scénario, seuls les module audio 36, le capteur de proximité 38 et le vibreur 55 sont activées (les éléments constitutifs ou les fonctions activées sont entourés d'un trait discontinu). Le capteur de proximité 38 permet de détecter l'approche d'un objet type contenant par le détecteur tenu par l'utilisateur. Le module audio 36 et le vibreur 55 permettent par les sons et les vibrations de simuler l'intensité des radiations mesurées par le détecteur.

La Figure FIG. 11 illustre schématiquement un procédé d'entrainement utilisant le système d'entrainement aux risques et menaces NRBC selon l'invention. Ce procédé est mis en œuvre par un programme d'ordinateur d'entrainement aux risques nucléaire, radiologique, biologique, chimique NRBC. Un scénario de réalité virtuelle 52 est choisi (étape S1) dans une bibliothèque de scénarii 51, puis chargé (étape S2) dans le masque à réalité virtuelle augmentée NRBC-AR 2. Le scénario de réalité virtuelle 52 est exécuté (EXEC - étape S3) en diffusant des images à un utilisateur portant le masque à réalité virtuelle augmentée NRBC-AR 2. En temps réel et en continu, au moins un paramètre physiologique PP de l'utilisateur est mesuré (MES PP - étape S4) lors de l'exécution dudit scénario de réalité virtuelle 52. Ce ou ces paramètres physiologiques PP sont comparés (COMP PP % PPRef - étape S5) à au moins une valeur physiologique de référence PPRef. Des valeurs physiologiques de référence PPRef sont stockées dans une base de données PPDB. Le scénario de réalité virtuelle 52 est adapté en temps réel en fonction de cette comparaison en contrôlant en temps réel l'état de stress de l'utilisateur, soit en adaptant au moins un paramètre environnemental intérieur du masque NRBC-AR 2 (ADAP 4/5 ? - étape S6), soit en adaptant le scénario de réalité virtuelle 52 lui-même (ADAP SCENn ? - étape S8), ou les deux. Il est possible de modifier (MOD 4/5 - étape S7) au moins un paramètre environnemental intérieur du masque NRBC-AR 2, en agissant sur un actuateur 4 ou sur la valve de la cartouche 5 comme expliqué précédemment. Il est aussi possible de modifier (SCENn+1- étape S9) le scénario de réalité virtuelle 52 proposé à l'utilisateur, par exemple pour un scénario plus adapté au niveau de compétence de l'utilisateur. L'exécution du scénario de réalité virtuelle est poursuivie jusqu'à son terme avec les nouvelles données. Les paramètres physiologiques PP de l'utilisateur mesurés comme les adaptations des paramètres environnementaux et/ou les adaptations du scénario peuvent avantageusement être enregistrés au cours de l'exécution du scénario de réalité virtuelle 52 dans un enregistrement (LOG - étape S10).

Le système et le procédé d'entrainement 1 peuvent être pilotés de plusieurs manières :
- soit dans un mode dit « manuel » où un instructeur pilote par l'intermédiaire du module de contrôle (PC ou tablette) 50 l'ensemble du déroulement de la session d'entrainement, c'est alors l'instructeur qui décide l'exécution des étapes S6 et S8 ;
- soit dans un mode dit « autonome » sans instructeur et sans module de contrôle (PC ou tablette) 50 où l'ensemble du déroulement de la session d'entrainement est décidé par l'exécution automatique des étapes S6 et S8 en fonction de données de référence et de seuil prévus dans le scénario de réalité virtuelle 52 ; ou
- soit dans un mode dit « intelligent » dans lequel l'instructeur est remplacé par un module de contrôle (PC ou tablette) 50 capable de produire un comportement intelligent (e.g. du type intelligence artificielle) où l'ensemble du déroulement de la session d'entrainement est décidé par l'exécution automatique des étapes S6 et S8 en fonction de données de référence et de seuil prévus dans le scénario de réalité virtuelle 52 et une base de données évolutive permettant d'éviter la répétabilité des évènements lors de l'exécution d'un scénario.

Le système d'entrainement 1 peut être calibrée afin d'expérimenter un grand nombre de cas particuliers, notamment en cas d'erreur de l'utilisateur lors d'une session d'entraînement ou même afin de tester l'utilisateur face à des complications. De plus, le système d'entrainement 1 permet de recréer le stress et la pression physique et mentale d'une situation réelle, par la chaleur, les sons, la régulation d'air, le rendu du champ de vision. Avec le système d'entrainement 1, lors d'une session d'entraînement, l'utilisateur peut apprendre des techniques et méthodes, et se rendre compte des erreurs faites pendant les immersions virtuelles sans que cela ne lui soit fatal (blessure, accident, etc...) et ainsi permettre de les éviter en intervention réelle. Les scénarii mis en œuvre par le système d'entrainement 1 peuvent couvrir des situations variées comme les accidents de tous types, les catastrophes naturelles, les attentats, les opérations de secours, les théâtres d'opérations militaires et leurs missions spécifiques. Les scénarii permettent d'appréhender l'identification des risques, la reconnaissance NRBC, l'analyse NRBC, les interventions en milieu contaminé, les doctrines de mise en œuvre des contremesures sanitaires, les principes de prise en charge des victimes, le contrôle des dommages, la conception et le déroulement des plans de secours. Les formations et entrainements s'adressent aux gestionnaires de crise, agents des ministères de l'intérieur, de la défense, de la justice, cadres d'établissements industriels chargés de la sécurité, formateurs en éducation sanitaire, etc...

Les dessins et leur description ci-dessus illustrent plutôt qu'ils ne limitent l'invention. Il convient de noter que les modes de réalisation de la présente invention sont adaptés à un usage pour l'entraînement d'un utilisateur, il peut aussi être utilisé pour entrainer un groupe d'utilisateur, chaque utilisateur ayant son propre masque NRBC-AR. Il est également possible que le système comprenne plusieurs objets du type contenant ou du type détecteur en fonction du scénario envisagé.

## Revendications

1. Un système d'entrainement (1) aux risques nucléaire, radiologique, biologique, chimique NRBC utilisant un scénario de réalité virtuelle (52), **caractérisé en ce que** le système (1) comprend un masque à réalité virtuelle augmentée NRBC-AR (2) comportant :
- un écran de réalité virtuelle (3) ;
- au moins un module de traitement graphique (9) comportant un microprocesseur graphique pour diffuser des images du scénario de réalité virtuelle (52) sur l'écran de réalité virtuelle (3) ;
- au moins un module de traitement principal (8) comportant un microprocesseur principal ;
- une mémoire (10) comportant le, au moins un, scénario de réalité virtuelle (52) ;
- au moins un capteur biométrique (6) mesurant un paramètre physiologique d'un utilisateur du masque NRBC-AR (2) lors de l'exécution dudit scénario de réalité virtuelle (52) ; et
- au moins un actuateur de stress (4) modifiant un paramètre environnemental intérieur du masque NRBC-AR (2) lors de l'exécution dudit scénario de réalité virtuelle (52), ledit actuateur de stress (4) comportant une valve à ouverture contrôlée (5) qui dirige de l'air vers l'intérieur du masque NRBC-AR (2) de manière à réguler un flux d'air entrant ;
le microprocesseur principal du module de traitement principal (8) est agencé pour :
- contrôler le microprocesseur graphique du module de traitement graphique (9) pour diffuser ledit scénario de réalité virtuelle (52) sur l'écran de réalité virtuelle (3) ;
- comparer le paramètre physiologique (PP) de l'utilisateur à une valeur physiologique de référence (PPRef) ; et
- adapter en temps réel ledit scénario de réalité virtuelle (52) en contrôlant en temps réel l'actuateur de stress (4) pour modifier au moins un paramètre environnemental intérieur du masque NRBC-AR (2), ladite modification d'au moins un paramètre environnemental intérieur du masque consistant au moins à opérer la valve à ouverture contrôlée (5) pour réguler le flux d'air entrant de façon à réduire l'arrivée de flux d'air pour augmenter un état de stress de l'utilisateur ou à augmenter l'arrivée de flux d'air pour réduire ledit état de stress de l'utilisateur.

2. Le système selon la revendication 1, dans lequel le capteur biométrique (6) est choisi parmi un capteur de pouls, un capteur de température corporelle, un capteur de mesure de la saturation en oxygène du sang, des électrodes de mesure de l'activité électrique du cerveau, un capteur de mesure de la fréquence respiratoire, un capteur de mesure du diamètre de la pupille, et/ou un capteur de mesure de la conductance électrodermale.

3. Le système selon l'une quelconque des revendications 1 à 2, dans lequel l'actuateur de stress (4) comporte en outre une résistance chauffante et/ou une électrode générant une décharge électrique.

4. Le système selon la revendication 1, dans lequel le masque à réalité virtuelle augmentée NRBC-AR (2) comporte en outre une cartouche filtrante (7), ladite cartouche filtrante (7) étant équipée de la valve à ouverture contrôlée (5).

5. Le système selon la revendication 1, dans lequel le masque à réalité virtuelle augmentée NRBC-AR (2) est couplé à un respirateur externe (80) par l'intermédiaire de la valve à ouverture contrôlée (5).

6. Le système selon l'une quelconque des revendications 4 à 5, dans lequel la cartouche filtrante (7) ou le respirateur externe (80) est équipée d'un générateur d'odeur (12), par exemple une ou plusieurs capsule ou pastille de gaz libérant une odeur spécifique.

7. Le système selon la revendication 4, dans lequel la cartouche filtrante (7) comporte une batterie (13).

8. Le système selon l'une quelconque des revendications 1 à 7, dans lequel le masque à réalité virtuelle augmentée NRBC-AR (2) comporte une carte électronique (17) intégrant le module de traitement graphique (9), le module de traitement principal (8) et la mémoire (10), ladite carte électronique (17) étant connectée à au moins une caméra de réalité virtuelle (16A, 16B, 16C et 16D), au moins un module audio (14), et/ou au moins une connectique filaire ou sans fil (11) intégrés audit masque NRBC-AR (2).

9. Le système selon l'une quelconque des revendications 1 à 8, comportant en outre un module de contrôle (50) interconnecté avec le masque NRBC-AR (2), le module de contrôle (50) comportant une bibliothèque (51) comprenant des scénarii de réalité virtuelle, au moins un scénario de réalité virtuelle (52) étant téléchargé vers la mémoire (10) du masque à réalité virtuelle augmentée NRBC-AR (2) avant l'exécution dudit scénario de réalité virtuelle (52).

10. Le système selon l'une quelconque des revendications 1 à 9, comportant en outre au moins un objet de type contenant (30) et au moins un objet de type détecteur (40) interconnectés ensemble ainsi qu'avec le module de contrôle (50) et ledit masque NRBC-AR (2).

11. Le système selon la revendication précédente, dans lequel chacun des objets de type contenant (30) et détecteur (40) comporte un microprocesseur secondaire (31B, 31C) connecté à une pluralité de capteurs et d'actionneurs, le microprocesseur secondaire (31B, 31C) étant agencé pour activer une ou plusieurs fonctions desdits capteurs et d'actionneurs lors de l'exécution dudit scénario de réalité virtuelle (52).

12. Un programme d'ordinateur d'entrainement aux risques nucléaire, radiologique, biologique, chimique NRBC utilisant un scénario de réalité virtuelle (52), le programme d'ordinateur comprenant des instructions de code de programme pour l'exécution des étapes suivantes lorsque le programme est exécuté par un microprocesseur d'un système d'entrainement (1) comportant un masque à réalité virtuelle augmentée NRBC-AR (2):
- exécuter un scénario de réalité virtuelle (52) en diffusant des images à un utilisateur portant le masque à réalité virtuelle augmentée NRBC-AR (2) ;
- mesurer en temps réel au moins un paramètre physiologique (PP) de l'utilisateur lors de l'exécution dudit scénario de réalité virtuelle (52) ;
- comparer le, au moins un, paramètre physiologique (PP) de l'utilisateur à au moins une valeur physiologique de référence (PPRef) ; et
- adapter en temps réel ledit scénario de réalité virtuelle (52) en contrôlant en temps réel l'état de stress de l'utilisateur en modifiant au moins un paramètre environnemental intérieur du masque à réalité virtuelle augmentée NRBC-AR (2) lors de l'exécution dudit scénario de réalité virtuelle (52), ladite modification d'au moins un paramètre environnemental intérieur du masque consistant au moins à réguler le flux d'air entrant vers l'intérieur du masque NRBC-AR (2) de façon à réduire l'arrivée de flux d'air pour augmenter un état de stress de l'utilisateur ou à augmenter l'arrivée de flux d'air pour réduire ledit état de stress de l'utilisateur.

13. Le programme d'ordinateur d'entrainement aux risques nucléaire, radiologique, biologique, chimique NRBC utilisant un scénario de réalité virtuelle (52) selon la revendication précédente, ladite modification d'au moins un paramètre environnemental intérieur du masque consiste en outre à chauffer l'air intérieur du masque et/ou à générer une décharge électrique à l'intérieur du masque.

## Patentansprüche

1. Trainingssystem (1) für nukleare, radiologische, biologische und chemische (NRBC) Risiken, das ein virtuelles Realitätsszenario (52) verwendet, **dadurch gekennzeichnet, dass** das System (1) eine NRBC-AR-Maske für erweiterte virtuelle Realität (2), die
- eine Anzeige für virtuelle Realität (3),
- mindestens ein Grafikverarbeitungsmodul (9) mit einem Grafikmikroprozessor zur Anzeige von Bildern des virtuellen Realitätsszenarios (52) auf dem Display für virtuelle Realität (3),
- mindestens ein Hauptverarbeitungsmodul (8) mit einem Hauptmikroprozessor,
- einen Speicher (10), der mindestens ein virtuelles Realitätsszenario (52) enthält,
- mindestens einen biometrischen Sensor (6), der einen physiologischen Parameter eines Benutzers der NRBC-AR-Maske (2) während der Ausführung des virtuellen Realitätsszenarios (52) misst, und
- mindestens einen Stressaktuator (4), der einen Umgebungsparameter im Inneren der NRBC-AR-Maske (2) während der Ausführung des virtuellen Realitätsszenarios (52) verändert, wobei der Stressaktuator (4) ein Ventil zur steuerbaren Öffnung (5) umfasst, das Luft ins Innere der NRBC-AR-Maske (2) leitet, um einen eingehenden Luftstrom zu regulieren, umfasst,
wobei der Hauptmikroprozessor des Hauptverarbeitungsmoduls (8) dazu eingerichtet ist,
- um den Grafikmikroprozessor des Grafikverarbeitungsmoduls (9) zur Anzeige des virtuellen Realitätsszenarios (52) auf dem Display für virtuelle Realität (3) zu steuern,
- um den physiologischen Parameter (PP) des Benutzers mit einem Referenzwert (PPRef) zu vergleichen,
- um das virtuelle Realitätsszenario (52) in Echtzeit anzupassen, indem der Stressaktuator (4) in Echtzeit gesteuert wird, um mindestens einen Umgebungsparameter im Inneren der NRBC-AR-Maske (2) zu verändern, wobei die Veränderung von wenigstens einem Umgebungsparameter im Inneren der Maske mindestens darin besteht, das Ventil zur steuerbaren Öffnung (5) zu betätigen, um den eingehenden Luftstrom zu steuern, um so die Luftzufuhr zu reduzieren und den Stresszustand des Benutzers zu erhöhen oder die Luftzufuhr zu erhöhen, um den Stresszustand des Benutzers zu verringern.

2. System nach Anspruch 1, wobei der biometrische Sensor (6) ausgewählt ist aus einem Pulssensor, einem Körpertemperatursensor, einem Sensor zur Messung der Sauerstoffsättigung des Blutes, Elektroden zur Messung der elektrischen Gehirnaktivität, einem Sensor zur Messung der Atemfrequenz, einem Sensor zur Messung des Pupillendurchmessers und/oder einem Sensor zur Messung der elektrodermalen Leitfähigkeit.

3. System nach einem der Ansprüche 1 oder 2, wobei der Stressaktuator (4) zusätzlich einen Heizwiderstand und/oder eine Elektrode zur Erzeugung einer elektrischen Entladung umfasst.

4. System nach Anspruch 1, wobei die NRBC-AR- Maske (2) für erweiterte virtuelle Realität zusätzlich eine Filterkartusche (7) umfasst, wobei die Filterkartusche (7) mit dem Ventil zur steuerbaren Öffnung (5) ausgestattet ist.

5. System nach Anspruch 1, wobei die NRBC-AR-Maske (2) für erweiterte virtuelle Realität mit einem externen Atemgerät (80) über das Ventil zur steuerbaren Öffnung (5) gekoppelt ist.

6. System nach einem der Ansprüche 4 oder 5, wobei die Filterkartusche (7) oder das externe Atemgerät (80) mit einem Geruchsgenerator (12) ausgestattet ist, beispielsweise mit einer oder mehreren Gas-Kapseln oder Gas-Pastillen, die einen spezifischen Geruch freisetzen.

7. System nach Anspruch 4, wobei die Filterkartusche (7) eine Batterie (13) enthält.

8. System nach einem der Ansprüche 1 bis 7, wobei die NRBC-AR-Maske (2) für erweiterte virtuelle Realität eine elektronische Karte (17) umfasst, in die das Grafikverarbeitungsmodul (9), das Hauptverarbeitungsmodul (8) und der Speicher (10) integriert ist, wobei die elektronische Karte (17) mit mindestens einer virtuellen Realität-Kamera (16A, 16B, 16C und 16D), mit mindestens einem Audiomodul (14) und/oder mit mindestens einer kabelgebundenen oder drahtlosen Verbindung (11) verbunden ist, die in die NRBC-AR-Maske (2) integriert sind.

9. System nach einem der Ansprüche 1 bis 8, das darüber hinaus ein Kontrollmodul (50) umfasst, das mit der NRBC-AR-Maske (2) verbunden ist, wobei das Kontrollmodul (50) eine Bibliothek (51) mit virtuellen Realitätsszenarien enthält, wobei mindestens ein virtuelles Realitätsszenario (52) vor der Ausführung des virtuellen Realitätsszenarios (52) in den Speicher (10) der NRBC-AR-Maske (2) für erweiterte virtuelle Realität heruntergeladen wird.

10. System nach einem der Ansprüche 1 bis 9, das darüber hinaus mindestens ein Objekt vom Typ Behälter (30) und mindestens ein Objekt vom Typ Detektor (40) umfasst, die miteinander sowie mit dem Kontrollmodul (50) und der NRBC-AR-Maske (2) verbunden sind.

11. System nach dem vorherigen Anspruch, wobei jedes Objekt vom Typ Behälter (30) und Detektor (40) einen Sekundärmikroprozessor (31B, 31C) umfasst, der mit mehreren Sensoren und Aktuatoren verbunden ist, wobei der Sekundärmikroprozessor (31B, 31C) dazu eingerichtet ist, eine oder mehrere Funktionen dieser Sensoren und Aktuatoren während der Ausführung des virtuellen Realitätsszenarios (52) zu aktivieren.

12. Computerprogramm zum Training für nukleare, radiologische, biologische und chemische (NRBC) Risiken, das ein virtuelles Realitätsszenario (52) verwendet, wobei das Computerprogramm Programmcodeanweisungen umfasst, die folgende Schritte ausführen, wenn das Programm von einem Mikroprozessor eines Trainingssystems (1) mit einer NRBC-AR-Maske (2) für erweiterte virtuelle Realität ausgeführt wird:
- Ausführen eines virtuellen Realitätsszenarios (52) durch Anzeigen von Bildern für einen Benutzer, der die NRBC-AR-Maske (2) für erweiterte virtuelle Realität trägt,
- Echtzeit-Messung von mindestens einem physiologischen Parameter (PP) des Benutzers während der Ausführung des virtuellen Realitätsszenarios (52),
- Vergleich des mindestens einen physiologischen Parameters (PP) des Benutzers mit mindestens einem physiologischen Referenzwert (PPRef), und
- Echtzeit-Anpassung des virtuellen Realitätsszenarios (52) durch Steuerung des Stresszustands des Benutzers in Echtzeit, indem mindestens ein Umgebungsparameter im Inneren der NRBC-AR-Maske (2) für erweiterte virtuelle Realität während der Ausführung des virtuellen Realitätsszenarios (52) verändert wird, wobei die Veränderung des mindestens einen Umgebungsparameters im Inneren der Maske mindestens darin besteht, den Luftstrom, der in das Innere die NRBC-AR-Maske (2) eintritt, zu regulieren, um die Luftzufuhr zu verringern und den Stresszustand des Benutzers zu erhöhen oder die Luftzufuhr zu erhöhen und den Stresszustand des Benutzers zu verringern.

13. Computerprogramm zum Training für nukleare, radiologische, biologische und chemische (NRBC) Risiken mit einem virtuellen Realitätsszenario (52) nach dem vorherigen Anspruch, wobei die Veränderung von mindestens einem Umgebungsparameter im Inneren der Maske zusätzlich das Erwärmen der Luft im Inneren der Maske und/oder das Erzeugen einer elektrischen Entladung innerhalb der Maske umfasst.

## Claims

1. A training system (1) in chemical, biological, radiological and nuclear CBRN risk using a virtual reality scenario (52), **characterized in that** the system (1) comprises a CBRN-AR augmented virtual reality mask (2) including :
- a virtual reality screen (3) ;
- at least one graphics processing module (9) comprising a graphics microprocessor for broadcasting images of the virtual reality scenario (52) on the virtual reality screen (3) ;
- at least one main processing module (8) comprising a main microprocessor ;
- a memory (10) comprising the, at least one, virtual reality scenario (52) ;
- at least one biometric sensor (6) measuring a physiological parameter of a user of the CBRN-AR mask (2) during the execution of said virtual reality scenario (52) ; et
- at least one stress actuator (4) modifying an internal environmental parameter of the CBRN-AR mask (2) during the execution of said virtual reality scenario (52), said stress actuator (4) comprising a controlled opening valve (5) which directs air towards the interior of the CBRN-AR mask (2) so as to regulate an incoming air flow ;
the main microprocessor of the main processing module (8) is arranged for :
- controlling the graphics microprocessor of the graphics processing module (9) to broadcast said virtual reality scenario (52) on the virtual reality screen (3) ;
- comparing the physiological parameter (PP) of the user with a reference physiological value (PPRef) ; and
- adapting said virtual reality scenario (52) in real time by controlling the stress actuator (4) in real time to modify at least one internal environmental parameter of the CBRN-AR mask (2), said modification of at least one internal environmental parameter of the mask consisting at least in operating the controlled opening valve (5) to regulate the flow of incoming air flow so as to reduce the arrival of air flow to increase a state of stress of the user or to increase the arrival of air flow to reduce said state of stress of the user.

2. The training system of claim 1, wherein the biometric sensor (6) is selected from a pulse sensor, a body temperature sensor, a sensor for measuring blood oxygen saturation, electrodes for measuring the electrical activity of the brain, a sensor for measuring respiratory rate, a sensor for measuring the diameter of the pupil, and/or a sensor for measuring the electrodermal conductance.

3. The training system according to anyone of claims 1 to 2, wherein the stress actuator (4) further comprises a heating resistor and/or an electrode generating an electric discharge.

4. The training system of claim 1, wherein the CBRN-AR augmented virtual reality mask (2) further comprises a filter cartridge (7), said filter cartridge (7) being equipped with the controlled opening valve (5).

5. The training system of claim 1, wherein the CBRN-AR augmented virtual reality mask (2) is coupled to an external respirator (80) via the controlled opening valve (5).

6. The training system according to anyone of claims 4 to 5, wherein the filter cartridge (7) or the external respirator (80) is equipped with an odor generator (12), for example one or more gas capsules or tablets releasing a specific odor.

7. The training system of claim 4, wherein the filter cartridge (7) includes a battery (13).

8. The training system according to anyone of claims 1 to 7, wherein the CBRN-AR augmented virtual reality mask (2) comprise an electronic board (17) integrating the graphics processing module (9), the main processing module (8) and the memory (10), said electronic board (17) being connected to at least one virtual reality camera (16A, 16B, 16C,16D), at least one audio module (14), and/or at least one wired or wireless connection (11) integrated into said CBRN-AR mask (2).

9. The training system according to anyone of claims 1 to 8, comprising a control module (50) interconnected with the CBRN-AR mask (2), the control module (50) comprising a library (51) comprising virtual reality scenarios, at least one virtual reality scenario (52) being uploaded to the memory (10) of the augmented virtual reality CBRN-AR mask (2) before the execution of said virtual reality scenario (52).

10. The training system according to anyone of claims 1 to 9, comprising at least one container-type object (30) and at least one detector-type object (40) interconnected together as well as with the control module (50) and the CBRN-AR mask (2).

11. The training system of claim 10, wherein each of the objects of container-type (30) and detector-type (40) includes a secondary microprocessor (31B, 31C) connected to a plurality of sensors and actuators, the secondary microprocessor **(31B,** 31C) being arranged to activate one or more functions of said sensors and actuators during the execution of said virtual reality scenario (52).

12. A computer program for training in chemical, biological, radiological and nuclear CBRN risk using a virtual reality scenario (52), the computer program comprising program code instructions for the execution of following steps when the program is executed by a microprocessor of a training system comprising a CBRN-AR augmented virtual reality mask (2):
- executing a virtual reality scenario (52) by broadcasting images to a user wearing the CBRN-AR augmented virtual reality mask (2) ;
- measuring in real time at least one physiological parameter (PP) of a user during the execution of said virtual reality scenario (52) ;
- comparing the, at least one, physiological parameter of the user (PP) with a, at least one, reference physiological value (PPRef) ; and
- adapting said virtual reality scenario (52) in real time by controlling a state of stress of the user in real time by modifying at least one internal environmental parameter of the CBRN-AR augmented virtual reality mask (2) during the execution of said virtual reality scenario (52), said modification of at least one internal environmental parameter of the mask consisting at least in regulating the flow of incoming air flow inside the CBRN-AR mask (2) so as to reduce the arrival of air flow to increase the state of stress of the user or to increase the arrival of air flow to reduce said state of stress of the user.

13. A computer program for training in chemical, biological, radiological and nuclear CBRN risk using a virtual reality scenario (52) of claim 12, wherein said modification of at least one internal environmental parameter inside the mask may also consist of heating the air inside the mask and/or generating an electric discharge inside the mask.
